**Europäisches Patentamt**

**European Patent Office**

**Office européen des brevets**

(11) Veröffentlichungsnummer: **0 145 659**
A2

# (12) EUROPÄISCHE PATENTANMELDUNG

(21) Anmeldenummer: **84810558.1**

(22) Anmeldetag: **19.11.84**

(51) Int. Cl.⁴: **C 01 G 15/00, C 22 B 58/00, C 22 B 3/00**

(30) Priorität: **17.11.83 CH 6178/83**

(43) Veröffentlichungstag der Anmeldung: **19.06.85 Patentblatt 85/25**

(84) Benannte Vertragsstaaten: **DE FR GB IT**

(71) Anmelder: **GEBRÜDER SULZER AKTIENGESELLSCHAFT, Zürcherstrasse 9, CH-8401 Winterthur (CH)**

(72) Erfinder: **Wynn, Nicholas Patrick, 35 Wyland Avenue, Toronto Ontario (CA)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

(54) **Verfahren zur Flüssig-Flüssig-Extraktion von Gallium aus basischen, wässrigen Lösungen mit Hilfe eines organischen Extraktionsmittels.**

(57) Verfahren zur Flüssig-Flüssig-Extraktion von Gallium aus basischen, wässerigen Lösungen, insbesondere aus der Natriumaluminatlauge der Tonerde-Produktion nach dem Bayer-Prozess, mit Hilfe eines organischen Extraktionsmittels, das aus einem Solvent und einem substituierten Hydroxychinolin zusammengesetzt ist, wobei ausser Gallium auch Aluminium in die organische Extraktionsmittellösung übertritt.

In fünf aufeinanderfolgenden Stufen wird zunächst die mit Gallium und Aluminium beladene organische Extraktionsmittellösung mit einer wässerigen Mineralsäurelösung in Stoffaustausch gebracht, wobei letztere mit Gallium und Aluminium beladen und von der organischen Extraktionsmittellösung getrennt wird. In der mit Gallium und Aluminium beladenen Lösung wird sodann Chloridsalz oder Salzsäure gelöst und mit einem organischen Solvent, z.B. einer n-Butylazetatlösung in Stoffaustausch gebracht.

Hierbei verbleibt Aluminium in der wässerigen Säurelösung, während das organische Solvent mit Gallium beladen wird.

Nach Abtrennung der wässerigen Säurelösung wird das organische Solvent von dem Galliumchlorid getrennt, welches das Ausgangsprodukt für die Herstellung von reinem Gallium bildet.

Ein wesentlicher Vorteil dieses Verfahrens besteht darin, dass in der dritten Stufe die mit Gallium und Aluminium beladene wässerige, konzentrierte Mineralsäure in Stoffaustausch mit einem organischen Solvent gebracht werden kann, das, ausser dass es wesentlich billiger ist, erheblich höher als substituiertes Hydroxychinolin mit Gallium beladen werden kann.

_ 1_

P.5844/SdBs

Gebrüder Sulzer Aktiengesellschaft, Winterthur (Schweiz)

Verfahren zur Flüssig-Flüssig-Extraktion von Gallium aus basischen, wässrigen Lösungen mit Hilfe eines organischen Extraktionsmittels

Die Erfindung betrifft ein Verfahren zur Flüssig-Flüssig-Extraktion von Gallium aus basischen, wässrigen Lösungen, insbesondere aus der Natriumaluminatlauge der Tonerde-Produktion nach dem Bayer-Prozess, mit Hilfe eines organischen Extraktionsmittels, das aus einem Solvent und einem substituierten Hydroxychinolin zusammengesetzt ist, wobei ausser Gallium auch Alumnium in die organische Extraktionsmittellösung übertritt.

Nach dem bekannten Bayer-Verfahren, das zur Herstellung von Aluminiumoxid aus Alumniummineralien (Bauxiten) dient, werden letztere bei erhöhter Temperatur und erhöhtem Druck mit Natronlauge aufgeschlossen.

Aus der Natriumaluminatlauge lässt sich Aluminiumhydroxid ausfällen, das anschliessend zu $Al_2O_3$ (Tonerde) gebrannt wird.

Der grösste Teil der Galliumproduktion erfolgt heute aus Bauxiten, welche bis ca. 0,01 % Gallium enthalten, in Verbindung mit dem Bayer-Prozess. Durch die Rezirkulation der Lauge wird das Gallium/Aluminium-Verhältnis von ca. 1:4000 in Bauxiten auf ca. 1:300 in der Aluminatlauge erhöht.

0145659

- 2 -

Gallium wird nach dem Erzaufschluss aus der Aluminatlauge meistens elektrolytisch mit Hilfe von Quecksilber gewonnen.

Es sind auch organische Substanzen bekannt, die Gallium aus basischen Lösungen zu extrahieren vermögen, die beispielsweise beim Bayer-Prozess behandelt werden. Die ersten bekanntgewordenen organischen Extraktionsmittel waren Hydroxychinolin und Acetylaceton, wie sie beispielsweise in der FR-PS 952 976 bzw. in der US-PS 3 887 681 erwähnt werden. Ihrer industriellen Anwendung stehen allerdings ihre hohe Löslichkeit in der basischen Lauge und ihre kleine Selektivität entgegen.

Die Entwicklung und Einführung der kupferspezifischen Extraktionsmittel auf Hydroxychinolin-Basis hat erst zu umfangreichen Untersuchungen der industriellen Anwendung dieser substituierten Hydroxychinoline, insbesondere des substituierten 8-Hydroxychinolins für die Extraktion von Gallium aus den Laugen des Bayer-Prozesses geführt.

Obwohl derartige organische Extraktionsmittel eine relativ grosse Selektivität von Gallium gegenüber Aluminium aufweisen, ist es trotzdem nicht möglich, Gallium aus einer Aluminatlauge des Bayer-Prozesses zu extrahieren, ohne ausserdem eine etwa gleiche oder grössere Menge von Aluminium zu extrahieren.

Ueblicherweise beträgt das Verhältnis von Aluminium zu Gallium in der Aluminatlauge des Bayer-Prozesses etwa 300:1, was ein Verhältnis von Aluminium zu Gallium im beladenen Extraktionsmittel von ca. 5:1 bis 15:1 zur Folge hat.

Deshalb führt eine einfache Rückextraktion des beladenen Extraktionsmittels mit Hilfe von Säure nicht zu reinem Gallium als Produkt, sondern zu einem Produkt, welches eine überwiegende Menge Aluminium aufweist.

In der US-PS 3 971 843 wird ein Verfahren beschrieben, bei dem die Lösung dieses Problems durch eine selektive Rückextraktion des Aluminiums aus dem beladenen Extraktionsmittel vorgenommen werden soll.

Indem man das mit Gallium und Aluminium beladene Extraktionsmittel zunächst mit einer verdünnten anorganischen Säure, z.B. 100 g/l Schwefelsäure in Kontakt bringt, ist es möglich, Aluminium aus dem Extraktionsmittel zu entfernen, während das Gallium nahezu vollständig in der Extraktionsmittellösung verbleibt.

Eine höher konzentrierte Säure kann dann verwendet werden, um nahezu reines Gallium aus der Extraktionsmittellösung zu entfernen.

Diese zweistufige Methode zur Rückextraktion von Aluminium und Gallium weist jedoch wesentliche Nachteile auf, wegen der relativ geringen Beladungskapazität der Extraktionsmittellösung für Gallium.

Wenn man substituierte Hydroxychinoline als Extraktionsmittel verwendet, ist es in der Praxis üblich, diese Mittel in einem organischen Verdünnungsmittel, üblicherweise raffiniertes Kerosen, zu lösen. Derartige Lösungen haben eine relativ niedrige Viskosität und können daher ohne weiteres mit wässrigen Lösungen von Natriumaluminat und anorganischen Säuren zur Erzielung eines relativ raschen Stoffüberganges in Kontakt gebracht werden.

Ausserdem liegt die Dichte derartiger Lösungen näher bei derjenigen des Lösungsmittels als des Extraktionsmittels.

- 4 -

Aus diesem Grund können die Phasen sehr wirksam durch Schwerkraft getrennt werden, nachdem sie miteinander in Kontakt gebracht worden sind.

Um ein Optimum der vorstehend erwähnten Eigenschaften zu erreichen, ist es üblich, Extraktionsmittellösungen zu verwenden zwischen ca. 5 und 10 Gewichtsprozent, höchstens 15 Gewichtsprozent.

Unter diesen Umständen ist die Beladung der Extraktionsmittellösung mit Gallium ziemlich niedrig, bestimmt unterhalb von 1 g/l und eher bei ca. 200-300 mg/l. Aus diesem Grund sind für die Extraktion von Gallium relativ grosse Mengen von Extraktionsmittellösung erforderlich.

In dem aus der genannten US-PS 3 971 843 bekannten zweistufigen Prozess der Rückextraktion der Metalle soll in einer ersten Ausführung die grosse erforderliche Menge der Extraktionsmittellösung, die nur mit etwa 300 mg/l mit Gallium beladen ist, zunächst mit einer niedrig konzentrierten Säure in Kontakt gebracht werden, um das Aluminium herauszulösen.

Anschliessend soll die Extraktionsmittellösung mit einer Säure höherer Konzentration in Kontakt gebracht werden, um das Gallium herauszulösen, das anschliessend als Produkt abgetrennt wird.

Wegen der geringen Konzentration der Metalle in der Extraktionsmittellösung ist der apparatemässige Aufwand einer Anlage zur Durchführung des Verfahrens hinsichtlich der Bemessung der einzelnen Anlageteile gross. Ausserdem sind verschiedene Stufen erforderlich, um Aluminium und Gallium aus der beladenen Extraktionsmittellösung herauszulösen. Daher ist dieser Prozess kostenmässig sehr aufwendig.

- 5 -

Substituiertes Hydroxychinolin als Extraktionsmittel ist gegenüber den für Kupfer-Extraktion gebräuchlicheren Hydroxyoximen teuer. Die Kosten für das erwähnte Extraktionsmittel bilden einen wesentlichen Faktor in einer Gallium-Extraktionsanlage.

In der US-PS 3 971 843 wird weiterhin ein Prozess für die selektive Rückextraktion von Gallium und Aluminium vorgeschlagen, indem Salzsäure oder Bromsäure verwendet werden sollen.

Zunächst soll hierbei Aluminium aus der beladenen Extraktionsmittellösung mit Hilfe einer höher konzentrierten Säure herausgelöst werden. Die Konzentration der Säure wird hierbei so gewählt, dass anionische Gallium Komplexe gebildet werden, welche in der Extraktionsmittellösung verbleiben. Die von Aluminium befreite Extraktionsmittellösung wird sodann mit einer schwächer konzentrierten Säurelösung in Kontakt gebracht, um relativ reines Gallium zu erhalten.

Obwohl bei diesem Prozess etwas bessere Trennungen als bei dem vorher erwähnten Prozess erreicht werden können, weist auch dieser Prozess die gleichen Nachteile auf, da die Gallium/Aluminium-Trennung aus verdünnten Lösungen mit einem teuren Extraktionsmittel durchgeführt wird.

Ein weiterer wesentlicher Nachteil besteht darin, dass die anionischen Komplexe, die erforderlich sind, um Gallium in der Extraktionsmittellösung zurückzuhalten, während Aluminium abgetrennt wird, am wirtschaftlichsten gebildet werden, wenn Salzsäure als Trennmittel für Aluminium verwendet wird.

0145659

- 6 -

Diese Säure ist nicht nur gegenüber Kohlenstoffstahl korrosiv sondern auch gegenüber austenitischem, rostfreien Stahl. Nur Nickellegierungen, wie sie beispielsweise unter dem Warenzeichen "Hastelloy" vertrieben werden, sind gegenüber konzentrierter Salzsäure genügend resistent, um in industriellen Anlagen Anwendung zu finden. Jedoch sind diese Metalle wegen ihres hohen Nickelgehaltes sehr teuer.

Es gibt zwar etliche Kunststoff- oder Gummiwerkstoffe, die gegenüber Salzsäure resistent sind. Jedoch ist die Mehrzahl dieser Stoffe über längere Zeit nicht resistent gegenüber den für das Extraktionsmittel verwendeten Verdünnungslösungsmitteln.

Dieses trifft insbesondere dann zu, wenn aromatische Stoffe verwendet werden. Die Anwendung dieser Verdünnungsmittel ist oft vorteilhaft wegen ihrer hohen Löslichkeit der verschiedenen Metallkomplexe, die während des Prozesses gebildet werden.

Für die wenigen Kunststoffe, die sowohl gegenüber Salzsäure als auch gegenüber den organischen Lösungsmitteln, z.B. Phenolharzen resistent sind, treten aber als wesentliche Nachteile auf, dass diese Stoffe an sich sich elektrostatisch aufladen können, und dass somit das gesamte System einer Feuer- bzw. Explosionsgefahr ausgesetzt ist.

Aus diesen Gründen wird Salzsäure vorzugsweise bei Lösungsmittel-Extraktionsprozessen nicht verwendet, insbesondere, wo nur niedrige Metallbeladungen der organischen Extraktionsmittellösung erreicht werden können.

In diesen Fällen wird bevorzugt Schwefelsäure benutzt, da diese Säure eine grosse Anzahl von rostfreien Stählen, die nicht so kostenaufwendig sind, nicht korrodiert.

- 7 -

Die der Erfindung zugrundeliegende Aufgabe besteht in der Auffindung eines Verfahrens zur Galliumgewinnung, welches möglichst wenig substituiertes Hydroxychinolin, insbesondere substituiertes 8-Hydroxychinolin erfordert und ausserdem die Durchführung des Verfahrens in Anlagen von relativ kleinen Bemessungen ermöglicht.

Die der Erfindung zugrundeliegende Aufgabe wird mit Hilfe der im Kennzeichen des Anspruchs 1 angegebenen Merkmale gelöst.

Gegenüber den vorstehend erwähnten bekannten Verfahren weist die Erfindung insbesondere die nachstehenden Vorteile auf.

Nachdem die organische Extraktionsmittellösung in einem einzigen Rührbehälter mit einer konzentrierten, wässrigen Mineralsäure, z.B. Schwefelsäure in Stoffaustausch gebracht worden ist, kann in einer zweiten Stufe in einer einzigen Trennvorrichtung, z.B. einem Absetzbehälter unter Schwerkraft, die sowohl von Gallium als auch Aluminium entladene Extraktionsmittellösung abgetrennt und in die Laugungsstufe des Aluminiumgewinnungsprozesses, z.B. des Bayer-Prozesses zurückgeführt werden.

Da erfindungsgemäss die organische Extraktionsmittellösung gleichzeitig von Gallium und Aluminium entladen wird, muss die Menge und Konzentration der konzentrierten, wässrigen Mineralsäure nicht so präzis eingestellt werden, wie dieses der Fall bei der bekannten, selektiven Abtrennung von Gallium und Aluminium ist.

Eine genaue Mengen- und Konzentrationseinstellung der Säure bzw. Säuren ist jedoch bekanntlich äusserst aufwendig.

- 8 -

Ein weiterer wesentlicher Vorteil der Erfindung besteht darin, dass in der dritten Stufe die mit Gallium und Aluminium beladene wässrige, konzentrierte Mineralsäure in Stoffaustausch mit einem organischen Solvent gebracht werden kann, das, ausser, dass es wesentlich billiger ist, erheblich höher als substituiertes Hydroxychinolin mit Gallium beladen werden kann. Ausserdem kann mit Gallium und Aluminium beladene wässrige Säure viel höher mit Gallium beladen werden, als dieses bei der Hydroxychinolin enthaltenden organischen Extraktionsmittellösung der Fall ist.

Dieses hat zur Folge, dass der Rührbehälter der dritten Stufe gegenüber dem Rührbehälter der ersten Stufe wesentlich kleiner bemessen werden kann.

Demzufolge kann auch die Trennvorrichtung, z.B. ein Absetzbehälter, der vierten Stufe entsprechend klein dimensioniert werden. Das gleiche gilt für die Trennvorrichtung, in welcher die fünfte Stufe des erfindungsgemässen Verfahrens durchgeführt wird. Ausführungsbeispiele für den in der fünften Stufe durchgeführten Verfahrensschritt werden im Kennzeichen des 5. und 6. Anspruches angegeben.

Eine gesamthafte Betrachtung der erfindungsgemässen Verfahrensschritte macht deutlich, dass ausser den vorstehend genannten Vorteilen bei der Erfindung eine wesentlich geringere Menge von teurem substituierten Hydroxychinolin benötigt wird als bei den bekannten Verfahren.

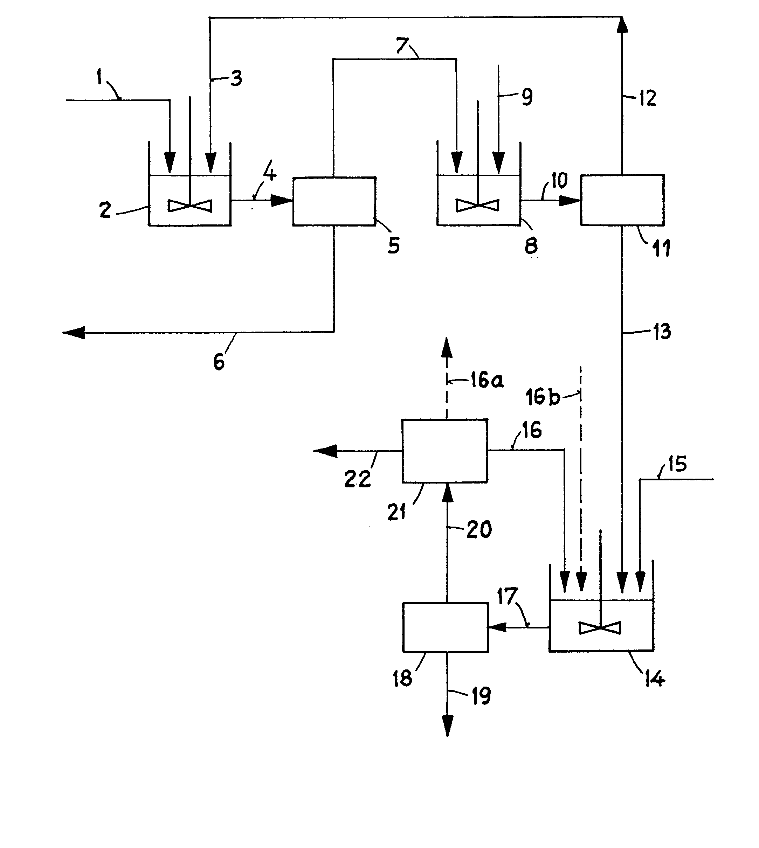

Die Erfindung wird im folgenden anhand eines in der Zeichnung schematisch dargestellten Fliessschemas einer Anlage, die zur Durchführung des erfindungsgemässen Verfahrens dient, erläutert.

- 9 -

Im Fliessschema sind die Anlagenelemente, die für sich alle bekannt sind, nur schematisch dargestellt.

Durch eine Leitung 1 wird eine Teilmenge einer Gallium und Aluminium enthaltenden Natriumaluminatlösung in einen Rührbehälter 2 eingespeist und dort mit, durch eine Leitung 3 eingespeister organischer Extraktionsmittellösung, die aus einem Solvent und einem substituierten Hydroxychinolin zusammengesetzt ist, in Stoffaustausch gebracht.

In bekannter Weise wird hierbei die organische Extraktionsmittellösung mit Gallium und einer im Vergleich zur Natriumaluminatlauge des Aluminium-Gewinnungsprozesses geringen Menge Aluminium beladen.

Das Gemisch wird sodann in einen Absetzbehälter 5 durch eine Leitung 4 eingespeist und hierin unter Schwerkraft in die an Gallium und Aluminium verarmte Lauge und die mit Gallium und Aluminium beladene organische Extraktionsmittellösung getrennt. Die entladene Lauge wird durch eine Leitung 6 in den Aluminium-Gewinnungsprozess zurückgeführt, während die mit Gallium und Aluminium beladene, organische Extraktionsmittellösung durch eine Leitung 7 in einen Rührbehälter 8 eingespeist und dort mit einer wässrigen, konzentrierten Mineralsäure, z.B. Schwefelsäure, die durch Leitung 9 hinzugefügt wird, in Stoffaustausch gebracht wird. Hierbei wird die wässrige, konzentrierte Mineralsäure sowohl mit Gallium als auch mit Aluminium beladen (1. Stufe).

Das Gemisch wird sodann durch eine Leitung 10 in eine Trennvorrichtung, vorzugsweise wiederum ein Absetzbehälter 11 eingespeist und in eine leichtere und schwerere Phase getrennt (2. Stufe).

- 10 -

Die abgetrennte, von Gallium und Aluminium entladene organische Extraktionsmittellösung wird sodann durch Leitung 12 aus dem Absetzbehälter 11 herausgeführt und durch die Anschlussleitung 3 in den Rührbehälter 2 zurückgeführt. Somit zirkuliert die organische Extraktionsmittellösung in einem geschlossenen Kreislauf, und es müssen höchstens geringe Verluste, beispielsweise Leckverluste ersetzt werden. Aus dem Absetzbehälter 11 wird die mit Gallium und Aluminium beladene wässrige, konzentrierte Säure durch Leitung 13 in einen Rührbehälter 14 eingespeist. Durch eine Leitung 15 wird Chloridsalz oder Salzsäure hinzugefügt, derart, dass sich die mit Gallium und Aluminium beladene wässrige, konzentrierte Säure auf eine Konzentration von mehr als 2 Mol/l Chlorid einstellt.

Durch eine Leitung 16 wird ein organisches Solvent, z.B. Butylazetat in den Rührbehälter 14 eingespeist. Durch Stoffaustausch mit der mit Gallium und Aluminium beladene Salzlösung wird das Solvent mit Gallium beladen, während Aluminium in der Salzlösung verbleibt (3. Stufe).

Das Gemisch wird sodann durch eine Leitung 17 in eine Trennvorrichtung 18, die wiederum als Absetzbehälter ausgebildet sein kann, eingespeist. In dem Absetzbehälter 18 wird unter Schwerkraft die leichtere von der schwereren Phase getrennt (4. Stufe).

Die mit Aluminium beladene Säurelösung wird durch Leitung 19 aus der Trennvorrichtung 18 herausgeführt, während das mit Galliumchlorid beladene organische Solvent durch Leitung 20 in eine Trennvorrichtung 21 eingespeist wird. Hierin wird das Galliumchlorid von dem organischen Solvent getrennt (5. Stufe).

- 11 -

Die Trennung kann beispielsweise so erfolgen, dass das organische Solvent verdampft wird und das Galliumchlorid aus der Trennvorrichtung 21 durch eine Leitung 22 herausgeführt wird. Das Galliumchlorid bildet das Ausgangsprodukt für die Gewinnung von Gallium in an sich bekannter Weise.

Das verdampfte, organische Solvent wird kondensiert und wieder durch Leitung 16 in den Rührbehälter 14 zurückgeführt. Die Trennung des organischen Solvents von Galliumchlorid kann auch auf andere Weise erfolgen, beispielsweise durch das im Anspruch 5 angegebene Trennverfahren.

Da das organische Solvent im Vergleich zu substituiertem Hydroxychinolin ein verhältnismässig billiges Mittel ist, kann z.B. das in der Trennvorrichtung 21 abgetrennte Solvent auch durch die gestrichelt dargestellte Leitung 16a aus der Trennvorrichtung 21 herausgeführt und verworfen werden, während frisches organisches Solvent durch die gestrichelt angegebene Leitung 16b in den Rührbehälter 14 eingespeist wird.

Wie bereits erwähnt, sind der Rührbehälter 14 und die Trennvorrichtung 18 und 21 wesentlich kleiner als die Rührbehälter 2 und 8 und die Trennvorrichtungen 5 und 11.

Im folgenden werden einige experimentell ermittelte Mengenangaben für einen, in der Anlage durchführbaren Prozess in einem Zahlenbeispiel angegeben.

- 12 -

Zahlenbeispiel

10 Liter einer Natriumaluminatlösung aus einem Bayer-Prozess, die 150 mg/l Ga, 71 g/l $Al_2O_3$ und 125 g/l $Na_2O$ enthielt, wurden mit 5 Liter einer organischen Extraktionsmittellösung in Kontakt und somit in Stoffaustausch gebracht.

Die organische Extraktionsmittellösung bestand aus 15 Vol % von substituiertem 8-Hydroxychinolin, 15 Vol % von Isodecanol und 70 Vol % von Shellsol K (eingetragenes Warenzeichen).

Bei der anschliessenden Trennung der beiden Phasen wurde ein Galliumgehalt von 215 mg/l und ein Aluminiumgehalt von 1.58 g/l in der organischen Extraktionsmittellösung gemessen.

Die mit Gallium und Aluminium beladene organische Extraktionsmittellösung wurde sodann mit 500 ml einer 600 g/l Schwefelsäure enthaltenden wässrigen Schwefelsäurelösung in Kontakt und somit in Stoffaustausch gebracht.

Nach der anschliessenden Trennung der beiden Phasen ergab eine Messung 270 ml der wässrigen Schwefelsäurelösung mit einem Gehalt von 92 % des Galliums, welches sich vorher in der organischen Extraktionsmittellösung befand.

Sodann wurden 47 g Natriumchlorid in den 270 ml wässriger Schwefelsäurelösung gelöst und mit 30 ml einer n-Butylazetatlösung in Kontakt und somit in Stoffaustausch gebracht.

Nach Abrennung der wässrigen Phase von der organischen Phase wurde letztere mit Dampf ausgetrieben. Nach dem Austreiben verblieb eine Lösung von 11 ml, die 76.5 g/l Gal-

lium und 5.6 g/l Aluminium enthielt, d.h. 78 % des Galliums, welches mit Hilfe von substituiertem 8-Hydroxychinolin aus der Natriumaluminatlösung extrahiert wurde, jedoch nur 0.8 % des mit dem Gallium zusammen extrahierten Aluminiums.

- 14 -

Patentansprüche

1. Verfahren zur Flüssig-Flüssig-Extraktion von Gallium aus basischen, wässrigen Lösungen, insbesondere aus der Natriumaluminatlauge der Tonerde-Produktion nach dem Bayer-Prozess, mit Hilfe eines organischen Extraktionsmittels, das aus einem Solvent und einem substituierten Hydroxychinolin zusammengesetzt ist, wobei ausser Gallium auch Aluminium in die organische Extraktionsmittellösung übertritt, dadurch g e k e n n z e i c h n e t , dass in einer ersten Stufe die mit Gallium und Aluminium beladene organische Extraktionsmittellösung in Stoffaustausch mit konzentrierter, wässriger Mineralsäure gebracht wird, wobei in diese Gallium und Aluminium übertritt, dass sodann in einer zweiten Stufe das entladene organische Extraktionsmittel von der konzentrierten, wässrigen Mineralsäure getrennt wird,

dass in einer dritten Stufe durch Hinzufügen von einem Chloridsalz oder Salzsäure der Chloridgehalt der konzentrierten, wässrigen, mit Aluminium und Gallium beladenen Mineralsäure auf eine Konzentration von mehr als 2 Mol/l Chlorid eingestellt wird,

und dass in der dritten Stufe die konzentrierte, wässrige Mineralsäure mit einem organischen Solvent aus der zwischen 2 und 16 Kohlenstoffatome enthaltenden Alkyläther oder aus der weniger als 10 Kohlenstoffatome enthaltenden Alkylazetat aufweisenden Gruppe in Stoffaustausch gebracht wird, wobei Galliumchlorid in das organische Solvent übertritt, während das Aluminium in der konzentrierten, wässrigen Mineralsäure verbleibt,

und dass in einer vierten Stufe die konzentrierte, wässrige Mineralsäure von dem mit Galliumchlorid beladenen organischen Solvent abgetrennt wird,

- 15 -

und dass schliesslich in einer fünften Stufe das organische Solvent von dem Galliumchlorid abgetrennt wird, während das abgetrennte Galliumchlorid das Ausgangsprodukt für die Herstellung von reinem Gallium bildet.

2. Verfahren nach Anspruch 1, dadurch gekennzeichnet, dass die Mineralsäure Schwefelsäure ist.

3. Verfahren nach Anspruch 1, dadurch gekennzeichnet, dass das Chloridsalz ein Alkalimetallsalz ist.

4. Verfahren nach Anspruch 1, dadurch gekennzeichnet, dass in der fünften Stufe das Galliumchlorid von dem organischen Solvent durch dessen Verdampfung abgetrennt wird, bevor das Solvent wieder kondensiert wird.

5. Verfahren nach Anspruch 1, dadurch gekennzeichnet, dass in der fünften Stufe das Galliumchlorid von dem organischen Solvent dadurch abgetrennt wird, indem das mit Galliumchlorid beladene organische Solvent mit Wasser oder einer verdünnten Lösung einer Mineralsäure in Stoffaustausch gebracht wird, wobei Galliumchlorid in das Wasser bzw. in die wässrige Phase übertritt und, dass sodann das organische Solvent von dem Wasser bzw. von der wässrigen Phase getrennt wird.

6. Verfahren nach Anspruch 1, dadurch gekennzeichnet, dass für die Extraktion von Galliumchlorid als organisches Solvent n-Butylazetat dient.

7. Verfahren nach Anspruch 1, dadurch gekennzeichnet, dass das in der fünften stufe abgetrennte organische Solvent wieder in die dritte Stufe zurückgeführt wird.

0145659